# DEMANDE DE BREVET EUROPEEN

(11) **EP 0 654 614 A1**
(43) Date de publication de la demande: **24.05.1995**
(21) Numéro de dépôt: 94420295.1
(22) Date de dépôt: 27.10.1994
(51) Int. Cl.: F16D 3/54, F16D 3/74

(54) **Dispositif d'accouplement élastique pour arbres tournants**

(30) Priorité: 19.11.1993 FR 9314075
(71) Demandeur: P.I.V. S.A., 69100 Villeurbanne (FR)
(72) Inventeur: Ducugnon, Jean, F-69300 Caluire (FR)
(74) Mandataire: Bratel, Gérard

(57) **Abrégé**

Le dispositif d'accouplement (1) lie en rotation, de façon élastique, deux arbres (2,3) sensiblement coaxiaux. Il comprend un organe annulaire en élastomère relativement incompressible (17), dont la région intérieure est en prise, directement ou par l'intermédiaire d'une courroie crantée (15), avec les dentures (7,12) de deux pignons (5,10) respectivement solidaires des extrémités des deux arbres (2,3) à accoupler. La rigidité ou l'élasticité du dispositif d'accouplement (1) est ajustable par des moyens de réglage de la compression axiale et radiale de l'organe annulaire (17). Ces moyens comprennent des vis de réglage (23), reliant deux flasques de serrage (19,20) qui recouvrent et enserrent l'organe annulaire (17). On obtient ainsi un accouplement semi-rigide de précision, ou un accouplement élastique.

## Description

La présente invention concerne un dispositif d'accouplement élastique pour arbres tournants, prévu pour relier les extrémités de deux arbres tournants, montés sensiblement suivant le même axe, en assurant la transmission mécanique du couple d'un arbre à l'autre tout en absorbant des défauts d'alignement de ces arbres.

Dans le domaine des machines et installations industrielles, la liaison en rotation entre deux arbres est couramment réalisée au moyen de dispositifs d'accouplement, parmi lesquels on distingue, d'une façon générale :
- les accouplements rigides, qui nécessitent un alignement précis des deux arbres à lier, et
- les accouplements flexibles ou élastiques, comportant des éléments élastiques qui, en se déformant, peuvent compenser des défauts d'alignement entre les deux arbres, et peuvent aussi amortir des vibrations.

L'invention s'intéresse à cette dernière catégorie d'accouplements et, encore plus particulièrement, aux dispositifs d'accouplement comportant un organe annulaire en élastomère ou matériau analogue relativement incompressible, dont la région intérieure est en prise, par engrènement et/ou adhérence, avec un premier pignon ou manchon rigide solidaire de l'extrémité d'un premier arbre, et est aussi en prise par engrènement et/ou adhérence avec un second pignon ou manchon rigide solidaire de l'extrémité d'un second arbre, sensiblement coaxial au premier, l'organe annulaire en élastomère ou matériau analogue étant lui-même entouré d'au moins un élément annulaire rigide qui le maintient en place.

Des dispositifs d'accouplement élastiques de ce genre sont connus, entre autres, par les documents DE-A-2042260, FR-A-839967 et DE-U-9308521.

Dans les réalisations connues par ces documents, une bague en élastomère fendue, pourvue cannelures dans sa région intérieure, est en prise avec deux éléments dentés rigides fixés, respectivement, aux extrémités des deux arbres à accoupler. La bague en élastomère, se présentant ainsi comme un tronçon de courroie crantée, est elle-même entourée d'une frette en acier. Dans une réalisation pratique existante, la frette est pourvue de tétons intérieurs destinés à la positionner sur ladite bague en élastomère, qui comporte à cet effet des logements complémentaires. Un tel dispositif d'accouplement élastique conserve des inconvénients :
- Bien que ce dispositif d'accouplement soit démontable sans déplacement des arbres qu'il lie en rotation, l'opération de démontage et surtout de remontage reste malaisée, notamment en raison des tétons de la frette extérieure, à positionner dans les logements correspondants de la bague en élastomère.
- Ce dispositif d'accouplement ne comporte aucune possibilité de réglage de sa rigidité ou de son élasticité, selon l'utilisation à laquelle il est destiné, ou selon le fonctionnement souhaité, ou encore pour compenser l'usure progressive du dispositif dans le temps.
- En général, la partie active du dispositif d'accouplement en question ne comporte aucune protection contre la pénétration des poussières et de l'humidité, alors qu'un tel dispositif d'accouplement concerne souvent des machines ou installations fonctionnant dans un milieu corrosif, pollué ou humide.

La présente invention vise à éviter ces inconvénients, en perfectionnant un dispositif d'accouplement élastique du genre ici considéré, de manière à permettre un réglage de sa rigidité ou de son élasticité, notamment en fonction de l'utilisation souhaitée, tout en permettant un démontage et un remontage aisés du dispositif d'accouplement sans déplacement des arbres, ce dispositif d'accouplement pouvant par ailleurs être parfaitement protégé vis-à-vis des agressions du milieu ambiant.

A cet effet, le dispositif d'accouplement élastique pour arbres tournants selon l'invention, appartenant au genre précisé ci-dessus, comporte des moyens de réglage de la compression axiale et radiale de son organe annulaire en élastomère ou matériau analogue relativement incompressible, ces moyens permettant d'ajuster la rigidité ou l'élasticité du dispositif d'accouplement.

Les moyens de réglage de la compression peuvent agir sur un organe annulaire en élastomère ou matériau analogue relativement incompressible qui se trouve directement en prise, par engrènement de dentures et/ou par adhérence, avec deux pignons ou manchons rigides respectivement solidaires des extrémités des deux arbres à accoupler. Ces moyens de réglage de la compression peuvent aussi, en variante, agir sur un organe annulaire en élastomère ou matériau analogue relativement incompressible monté et serré autour d'un tronçon de courroie crantée, lui-même en prise avec les dentures de deux pignons respectivement solidaires des extrémités des deux arbres à accoupler.

Selon une forme de réalisation préférée de l'invention, les moyens de réglage de la compression axiale et radiale de l'organe annulaire en élastomère ou matériau analogue relativement incompressible comprennent deux flasques de serrage rigides, le premier flasque recouvrant une partie de la périphérie de cet organe, et l'une de ses faces frontales annulaires, et le second flasque recouvrant une autre partie de la périphérie dudit organe et sa face frontale annulaire opposée à la précédente, tandis que des moyens de liaison à vis, manoeuvrables depuis l'extérieur, relient les deux flasques de serrage en permettant une modification de leur espacement axial. La compression axiale plus ou moins forte de l'organe annulaire en élastomère, due au serrage des moyens à vis, se transforme en compression radiale du fait que l'élastomère utilisé est relativement incompressible.

Avantageusement, les moyens de liaison à vis, montés entre les deux flasques de serrage, comprennent une pluralité de vis de réglage, sensiblement parallèles à l'axe général du dispositif d'accouplement et réparties à intervalles angulaires réguliers à la périphérie de ce dispositif, les têtes des vis de réglage prenant appui sur l'un des deux flasques de serrage, tandis que les filetages de ces vis de réglage sont vissés dans des écrous ou taraudages correspondants liés à l'autre flasque de serrage.

Les tiges des différentes vis de réglage peuvent traverser des passages ou des encoches ménagés dans l'organe annulaire en élastomère ou matériau analogue. Dans une variante, cet organe annulaire en élastomère ou matériau analogue est réalisé en plusieurs tronçons, séparés les uns des autres en direction circonférentielle par des espaces libres que traversent les vis de réglage. L'organe annulaire en élastomère ou matériau analogue peut encore comporter sur l'un de ses côtés des encoches ménagées à intervalles angulaires réguliers, et logeant les écrous associés aux différentes vis de réglage.

Dans une variante, les vis de réglage sont disposées à l'extérieur de la bague en élastomère ou matériau analogue, et sont de préférence noyées dans les parties périphériques des deux flasques de serrage ; chaque vis de serrage est, dans ce cas, directement vissée dans un taraudage de l'un des flasques, ce qui rend inutile tout écrou. Notamment dans cette variante, des cales annulaires sont interposées entre les deux flasques de serrage, dont les bords respectifs situés en regard l'un de l'autre sont relativement rapprochés, l'épaisseur totale des cales déterminant le degré de serrage de la bague en élastomère ou matériau analogue lorsque les vis de serrage sont serrées à fond.

Selon une autre variante, les parties périphériques respectives des deux flasques de serrage possèdent une faible longueur axiale, et un élément tubulaire rigide de relativement faible épaisseur est monté entre les deux flasques de serrage, autour de l'organe annulaire en élastomère ou matériau analogue. Le degré de serrage de la bague en élastomère est ainsi déterminé soit par le choix de la longueur de l'élément tubulaire, soit par l'épaisseur de cales annulaires insérées entre cet élément tubulaire et les deux flasques de serrage.

Selon une caractéristique complémentaire, les deux flasques de serrage s'étendent, en direction de l'axe général du dispositif d'accouplement, jusqu'à une faible distance du pignon ou manchon rigide correspondant, solidaire de l'extrémité de l'un des deux arbres à accoupler, et un joint annulaire d'étanchéité souple est monté entre la région du bord circulaire intérieur de chaque flasque de serrage et la face en regard appartenant au pignon ou manchon rigide correspondant.

Dans l'ensemble, un tel dispositif d'accouplement élastique pour arbres tournants comporte les avantages suivants :

Contrairement à toutes les réalisations actuellement connues, ce dispositif d'accouplement possède une rigidité ou élasticité réglable, notamment en fonction de l'utilisation désirée, le réglage influençant toutes les rigidités ou élasticités (radiale, axiale, torsionnelle et conique) qui interviennent habituellement dans ce genre d'accouplements.

Le réglage de l'élasticité du dispositif d'accouplement est commodément réalisable au moyen de vis, qui de surcroît assurent l'assemblage et la cohésion de tous les composants du dispositif d'accouplement, tout en autorisant un démontage et un remontage aisés, par exemple pour procéder au remplacement rapide de l'organe en élastomère en cas d'usure très importante de ce dernier.

Dans le cas d'un dispositif d'accouplement avec dentures, la solution proposée permet toujours un rattrapage de jeu au niveau des dents. En cas d'usure des dentures, les vis de réglage peuvent être resserrées pour rattraper le jeu d'engrènement, ce qui permet de prolonger la durée de vie du dispositif d'accouplement et de diminuer ainsi les coûts d'exploitation.

Les deux flasques de serrage, et les deux joints d'étanchéité annulaires associés respectivement aux deux flasques, emprisonnent et protègent entièrement la partie active du dispositif (partie transmettant le couple) vis-à-vis du milieu ambiant, sans toutefois s'opposer au réglage, compte tenu de la souplesse de ces joints. Les filetages des vis de réglage sont eux aussi protégés contre l'oxydation, ce qui facilite grandement les réglages ultérieurs et le démontage.

Le réglage de l'élasticité du dispositif d'accouplement peut être facilement maîtrisé en prédéfinissant et en indiquant l'écartement axial des deux flasques de serrage, et/ou en réalisant le serrage des vis de réglage à l'aide d'une clé dynamomètrique.

La réalisation de ce dispositif d'accouplement reste économique, et son principe est applicable sans difficulté à des dispositifs d'accouplement de grandes dimensions, transmettant des couples importants.

Le simple choix des matériaux de l'organe annulaire en élastomère ou analogue et de l'éventuel tronçon de courroie dentée, ainsi que le serrage plus ou moins important des vis de réglage, permet d'adapter à diverses utilisations ou conditions des dispositifs d'accouplement réalisés à partir des mêmes composants ; ceci rend le dispositif universel, en lui permettant de se substituer à plusieurs types d'accouplements existant actuellement dans le commerce, et contribue de façon générale à une économie. En particulier, l'invention permet de réaliser à un faible coût un accouplement de précision.

Enfin, ce dispositif d'accouplement possède un fonctionnement silencieux, et sans vibrations, puisqu'il réalise par lui-même l'amortissement, il ne nécessite ni graissage, ni entretien, et il génère peu de contraintes sur les arbres accouplés.

De toute façon, l'invention sera mieux comprise à l'aide de la description qui suit, en référence au dessin schématique annexé représentant, à titre d'exemples, quelques formes d'exécution de ce dispositif d'accouplement élastique pour arbres tournants :
Figure 1 est une vue latérale, en demi-coupe suivant I-I de figure 2, d'un premier dispositif d'accouplement élastique conforme à la présente invention ;
Figure 2 est une vue d'ensemble en coupe de ce premier dispositif d'accouplement, suivant II-II de figure 1 ;
Figure 3 est une vue partielle, en coupe suivant III-III de figure 1, illustrant un détail de ce premier dispositif d'accouplement ;
Figure 4 est une vue latérale, en demi-coupe suivant IV-IV de figure 5, d'un deuxième dispositif d'accouplement élastique conforme à la présente invention ;
Figure 5 est une vue d'ensemble en coupe de ce deuxième dispositif d'accouplement, suivant V-V de figure 4 ;
Figure 6 est une vue latérale, en demi-coupe suivant VI-VI de figure 7, d'un troisième dispositif d'accouplement élastique conforme à la présente invention ;
Figure 7 est une vue d'ensemble en coupe de ce troisième dispositif d'accouplement, suivant VII-VII de figure 6 ;
Figure 8 est une vue partielle, en coupe suivant VIII-VIII de figure 6, illustrant un détail de ce troisième dispositif d'accouplement ;
Figure 9 est une vue en coupe passant par l'axe d'un quatrième dispositif d'accouplement élastique conforme à la présente invention ;
Figure 10 est une vue d'ensemble en coupe de ce quatrième dispositif d'accouplement, suivant X-X de figure 9 ;
Figure 11 est une vue en coupe passant par l'axe d'un cinquième dispositif d'accouplement élastique conforme à la présente invention ;
Figure 12 est une vue d'ensemble en coupe de ce cinquième dispositif d'accouplement, suivant XII-XII de figure 11 ;
Figure 13 est une vue en demi-coupe passant par l'axe d'un sixième dispositif d'accouplement élastique conforme à la présente invention ;
Figure 14 est une vue partielle en coupe de ce dernier dispositif d'accouplement, suivant XIV-XIV de figure 13.

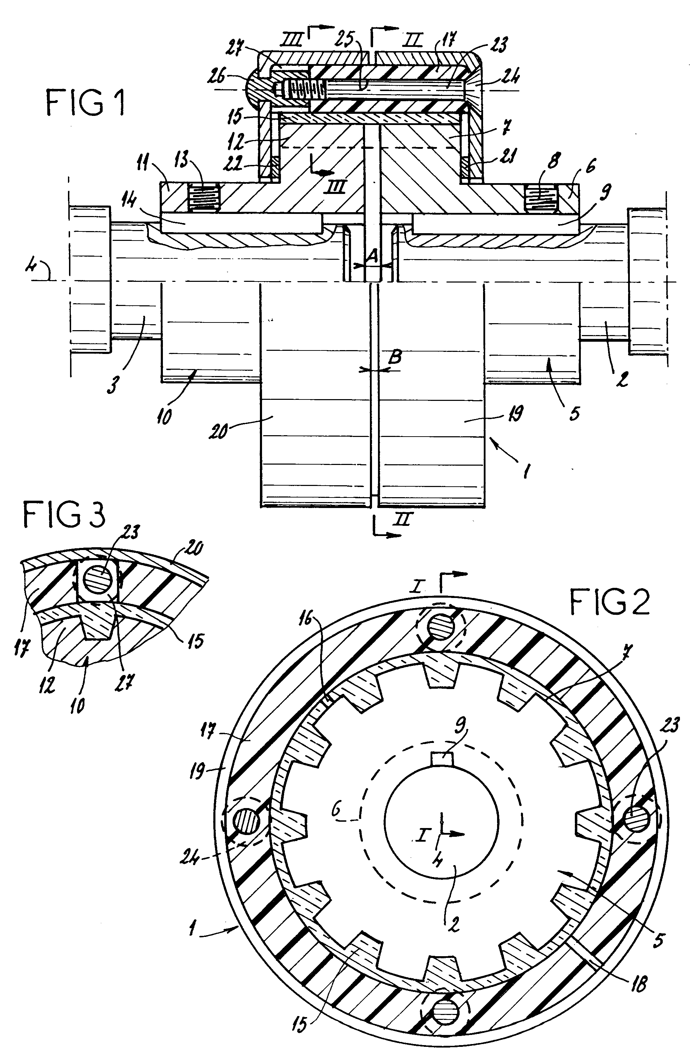

Les figures 1 à 3 représentent un premier dispositif d'accouplement élastique, désigné dans son ensemble par le repère 1, qui relie les extrémités de deux arbres tournants 2 et 3, montés sensiblement suivant le même axe 4, par exemple un arbre menant 2 et un arbre mené 3 dans une machine ou dans une installation industrielle ; le dispositif d'accouplement 1 assure la transmission du couple entre l'arbre menant 2 et l'arbre mené 3 en absorbant les défauts d'alignement de ces arbres.

Le dispositif d'accouplement 1 comprend ici un premier pignon 5 en acier, avec un moyeu 6 et une denture 7, qui est monté et calé sur l'extrémité de l'arbre menant 2. Le moyeu 6 du pignon 5 est bloqué latéralement sur l'arbre 2 au moyen d'une vis de fixation 8, tandis qu'une clavette 9 assure la liaison d'entraînement en rotation entre l'arbre menant 2 et le premier pignon 5.

D'une manière symétrique, le dispositif d'accouplement 1 comprend aussi un second pignon 10 en acier, avec un moyeu 11 et une denture 12, qui est monté et calé sur l'extrémité de l'arbre mené 3. Le moyeu 11 du pignon 10 est bloqué latéralement sur l'arbre 3 au moyen d'une vis de fixation 13, tandis qu'une clavette 14 assure la liaison d'entraînement en rotation entre le second pignon 10 et l'arbre mené 3.

Les dentures respectives 7 et 12 des deux pignons 5 et 10 sont identiques, et situées l'une en regard de l'autre, les faces frontales en regard des deux pignons 5 et 10 étant séparées l'une de l'autre, dans la direction de l'axe 4, par une distance A.

Autour des deux dentures 7 et 12, appartenant respectivement aux deux pignons 5 et 10, est enroulé un tronçon de courroie crantée 15, dont les cannelures tournées vers l'axe 4 viennent s'imbriquer dans les deux dentures 7 et 12 en assurant leur liaison. Les deux extrémités rapprochées du tronçon de courroie crantée 15 sont séparées par une étroite fente radiale 16.

Autour de la surface extérieure cylindrique relativement lisse du tronçon de courroie crantée 15 est montée une bague en élastomère ou similaire relativement incompressible 17, possédant une section courante sensiblement rectangulaire. La bague 17 peut être formée à partir d'une bande enroulée sur elle-même en anneau, dont les extrémités rapprochées sont séparées par une étroite fente radiale 18 qui est, de préférence, placée dans une position diamétralement opposée à la fente radiale 16 précitée.

A la périphérie du dispositif d'accouplement 1 sont montés symétriquement deux flasques de serrage 19 et 20 en tôle. Le premier flasque de serrage 19 recouvre le tronçon de courroie crantée 15 et la bague en élastomère 17 dans leurs régions entourant la denture 7 du premier pignon 5, ce premier flasque 19 s'étendant en direction de l'axe 4 jusqu'à une faible distance du moyeu 6 du pignon 5. De manière symétrique, le second flasque de serrage 20 recouvre le tronçon de courroie crantée 15 et la bague en élastomère 17, dans leurs régions entourant la denture 12 du second pignon 10, ce second flasque 20 s'étendant en direction de l'axe 4 jusqu'à une faible distance du moyeu 11 du pignon 10.

Un joint annulaire d'étanchéité 21 est monté entre le bord circulaire intérieur du premier flasque de serrage 19 et la face annulaire du premier pignon 5 située en regard de ce bord. De même, un autre joint annulaire d'étanchéité 22 est monté entre le bord circulaire intérieur du second flasque de serrage 20 et la face annulaire du second pignon 10 située en regard de ce bord.

Les deux flasques de serrage 19 et 20 sont reliés l'un à l'autre par une pluralité de vis de réglage 23, par exemple quatre vis de réglage 23, parallèles à l'axe 4 et réparties à intervalles angulaires réguliers (ici de 90°) à la périphérie du dispositif d'accouplement 1. La tête 24 de chaque vis de réglage 23 prend appui sur l'un des flasques de serrage, tel que le premier flasque 19, traversé par cette vis 23. La tige de chaque vis de réglage 23 traverse un passage 25 ménagé dans la bague en élastomère 17 parallèlement à l'axe 4. Enfin, l'extrémité filetée de chaque vis de réglage 23 est vissée dans un écrou correspondant 26, qui est lui-même lié, par exemple par rivetage, à l'autre flasque 20.

Comme le montre plus particulièrement la figure 3, la bague en élastomère 17 est pourvue, sur l'un de ses côtés, d'une pluralité d'encoches 27 ménagées à intervalles angulaires réguliers, qui servent de logements aux différents écrous 26 associés aux vis de réglage 23.

En agissant à l'aide d'un tournevis ou d'une clé sur les têtes 24 des différentes vis de réglage 23, on modifie l'espacement B entre les bords en regard des deux flasques de serrage 19 et 20. On agit ainsi sur la bague en élastomère 17, en provoquant sa compression axiale et par conséquent radiale, ce qui permet de faire varier la pression interne dans cette bague 17 et, par conséquent, de régler la rigidité ou l'élasticité du dispositif d'accouplement 1, tout en assurant un rattrapage du jeu d'engrènement entre les dentures 7 et 12 des pignons 5 et 10 et les cannelures du tronçon de courroie crantée 15.

La rigidité ou l'élasticité du dispositif d'accouplement peut en outre être influencée par le choix de la distance A entre les deux pignons 5 et 10, et aussi, naturellement, par le choix du matériau de la bague 17.

On notera que les deux joints d'étanchéité 21 et 22 sont choisis suffisamment souples pour ne pas contrarier le réglage assuré au moyen de vis 23. Ces joints d'étanchéité 21 et 22 évitent l'entrée des poussières et de l'humidité à l'intérieur du dispositif d'accouplement 1, et ainsi ils protègent notamment de l'oxydation les filetages des vis de réglage 23 et des écrous 26, ce qui donne la certitude de pouvoir, à tout moment, effectuer un réglage et même un démontage de ce dispositif d'accouplement 1.

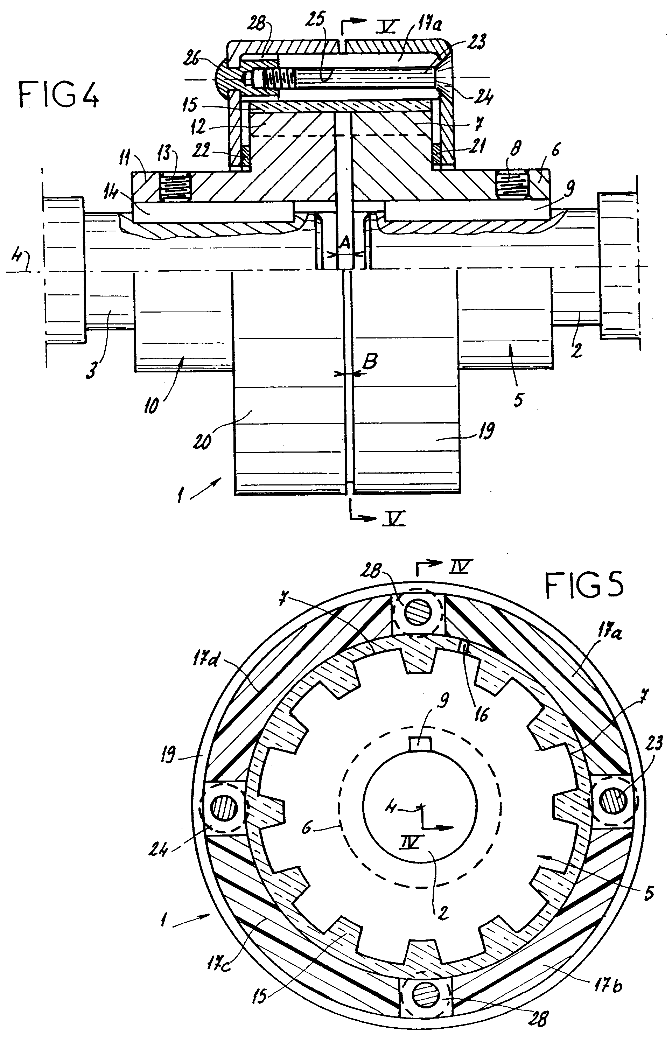

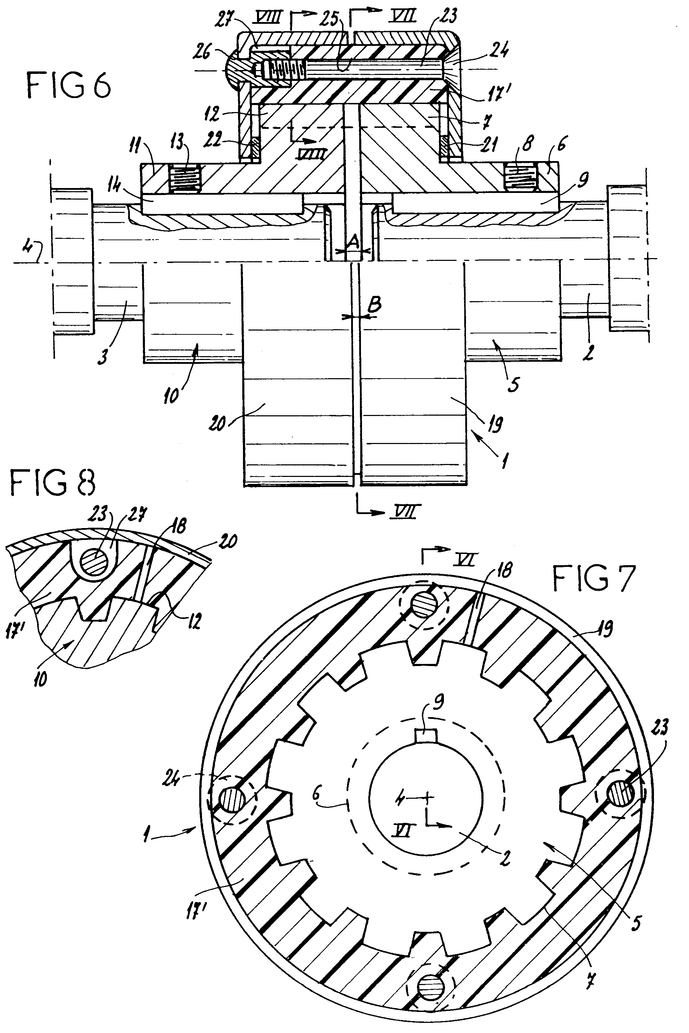

Les figures 4 et 5 représentent un deuxième dispositif d'accouplement élastique 1, pouvant être considéré comme une variante du précédent, avec lequel il possède de nombreux éléments communs, désignés par les mêmes repères numériques, qui ne seront pas décrits une nouvelle fois.

La particularité de cette variante réside dans le remplacement de la bague en élastomère réalisée précédemment en une seule pièce, par quatre tronçons de bande en élastomère séparés 17a,17b,17c et 17d. Chaque tronçon de bande 17a,17b,17c ou 17d est incurvé et s'étend sensiblement sur un quart de tour, entre la surface extérieure du tronçon de courroie crantée 15 et les deux flasques de serrage 19 et 20. Les tronçons de bande 17a,17b,17c et 17d sont séparés les uns des autres, en direction circonférentielle, par des espaces libres 28 qui sont traversés librement par les quatre vis de réglage 23, et qui logent les écrous 26 associés à ces vis de réglage 23.

Pour des raisons de commodité de montage, les quatre tronçons de bande en élastomère 17a,17b,17c et 17d peuvent être collés sur l'un des deux flasques de serrage 19 ou 20. L'action des vis de réglage 23 sur ces tronçons de bande en élastomère 17,17b,17c et 17d est analogue à celle exercée sur la bague en élastomère 17 de la première forme d'exécution décrite.

Les figures 5 à 8 représentent un troisième dispositif d'accouplement élastique 1 dans lequel la bague en élastomère 17', montée sous les deux flasques de serrage 19 et 20, est d'épaisseur plus importante et occupe ainsi le volume du tronçon de courroie des précédentes formes d'exécution qui est ici supprimé. La bague en élastomère 17' est crantée intérieurement, et elle s'imbrique dans les dentures respectives 7 et 12 des deux pignons 5 et 10. On obtient ainsi un dispositif d'accouplement 1 plus flexible que les précédents, et toujours réglable au moyen des vis 23.

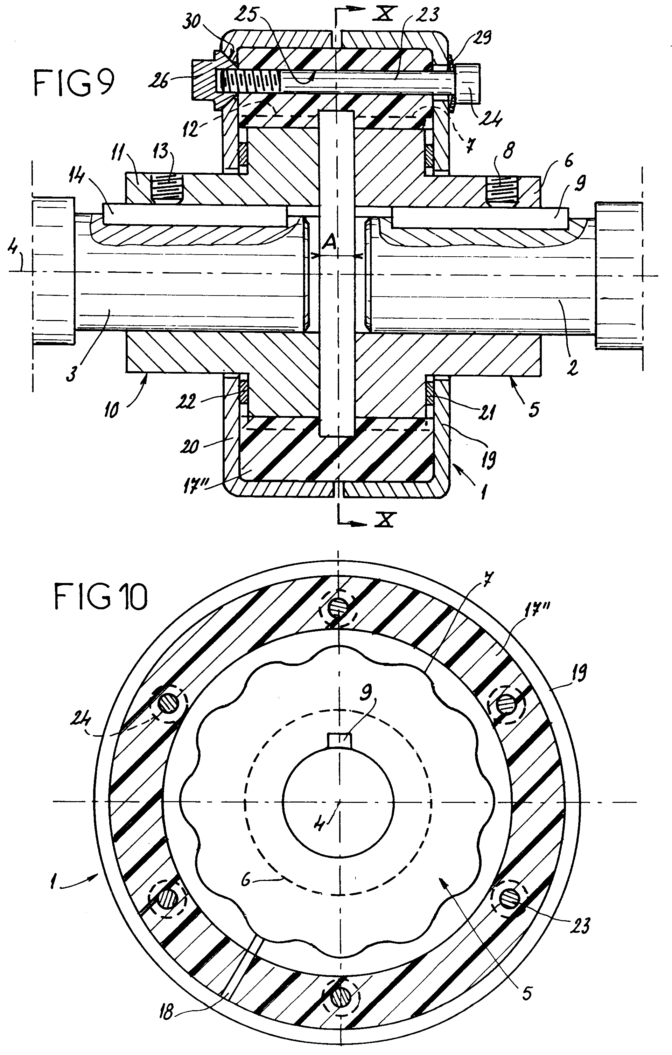

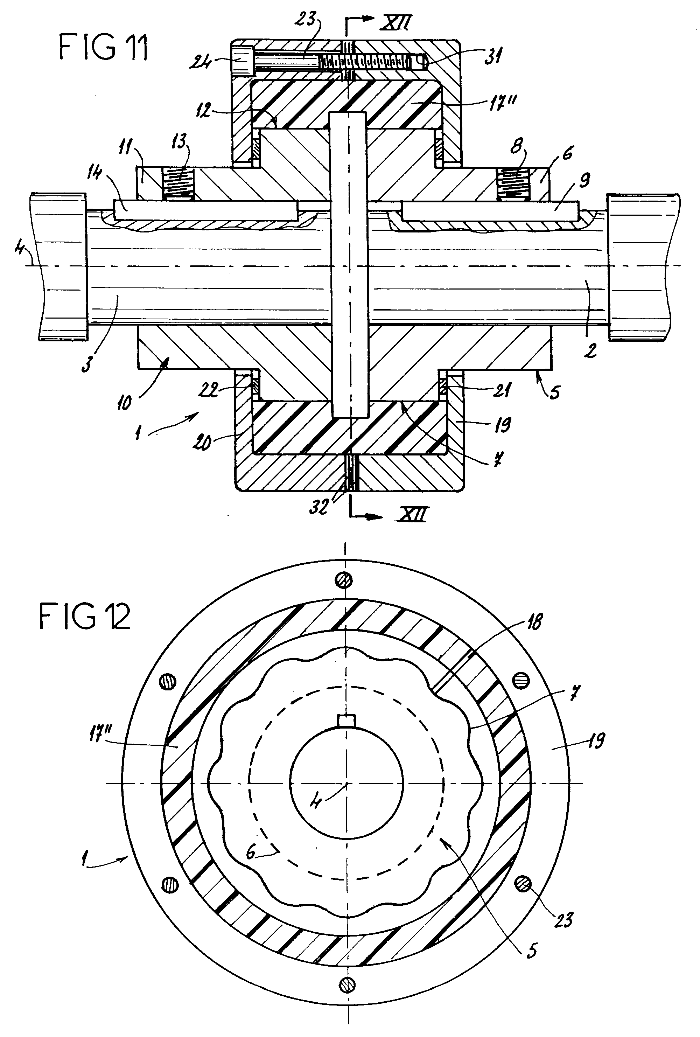

Les figures 9 et 10 représentent un quatrième dispositif d'accouplement élastique 1, dans lequel les deux pignons 5 et 10 possèdent des dentures respectives 7 et 12 moins profondes, et de profil ondulé. Une bague en élastomère souple 17'', montée sous les deux flasques de serrage 19 et 20, possède intérieurement un profil ondulé complémentaire. Cette forme de réalisation permet des désalignements importants entre les deux arbres 2 et 3, et aussi un décalage torsionnel important, moyennant les adaptations suivantes :

D'une part, les deux joints annulaires d'étanchéité 21 et 22 sont des joints très souples.

D'autre part, la tête 24 de chaque vis de réglage 23 prend appui sur l'un des flasques de serrage 19 par l'intermédiaire d'une rondelle élastique 29, tandis que l'écrou associé 26 possède une partie sensiblement hémisphérique 30, et est ainsi lié de façon oscillante à l'autre flasque de serrage 20.

Les figures 11 et 12 représentent un cinquième dispositif d'accouplement élastique 1, utilisant encore deux pignons 5 et 10 dont les dentures respectives 7 et 12 possèdent un profil ondulé, et reçoivent une bague en élastomère souple 17'' de profil intérieur ondulé complémentaire. Les vis de réglage 23 sont ici disposées à l'extérieur de la bague en élastomère 17'', qu'elle ne traversent donc plus, chaque vis de réglage 23 prenant appui par sa tête 24 sur l'un des flasques de serrage 20, tandis que son filetage est vissé directement dans un taraudage 31 ménagé dans l'autre flasque de serrage 19 (les écrous oscillants ou autres étant ici supprimées).

Entre les deux flasques de serrage 19 et 20 sont interposées des cales 32, en forme d'anneaux plats pourvus de trous pour le passage des vis de serrage 23. Le réglage de la pression axiale exercée sur la bague en élastomère 17'' s'effectue par le choix de l'épaisseur et/ou du nombre des cales 32, les vis de réglage 23 étant serrées à fond dans les taraudages 31 et les deux flasques 19 et 20 étant alors solidarisés par friction. Les différentes rigidités ou élasticités de l'accouplement sont toujours obtenues par déformation de la bague en élastomère 17'' entre les dentures 7 et 12 et les faces internes des flasques de serrage 19 et 20, plus ou moins rapprochés selon l'épaisseur totale des cales 32.

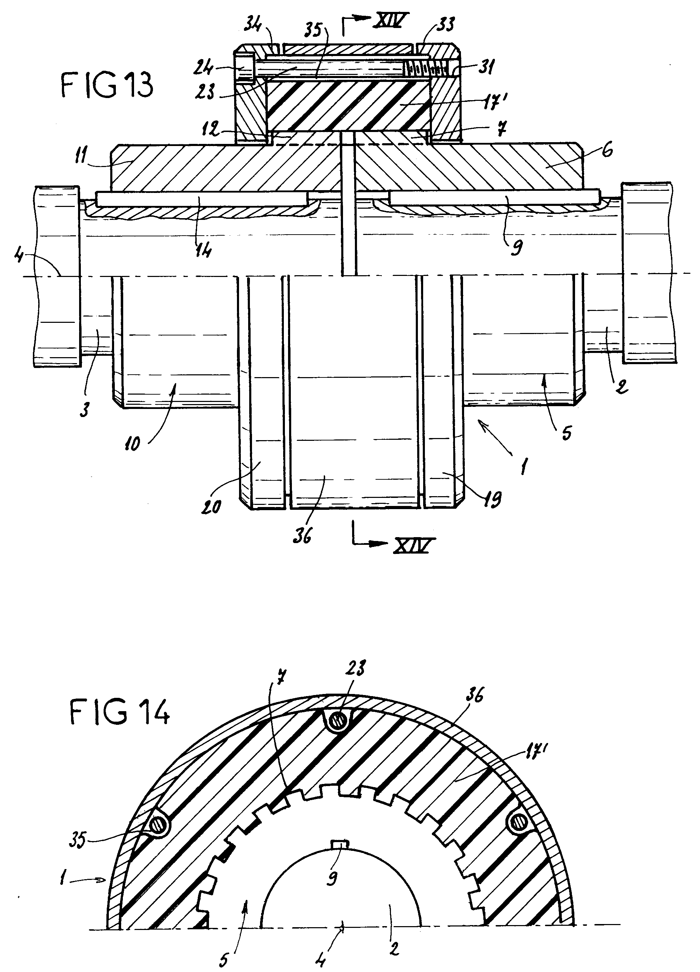

Les figures 13 et 14 représentent un sixième et dernier dispositif d'accouplement élastique, utilisant lui aussi deux pignons 5 et 10 dont les dentures respectives 7 et 12 sont en prise avec une bague en élastomère 17' crantée intérieurement. Les deux flasques de serrage rigides 19 et 20 sont appliqués respectivement contre les deux faces frontales annulaires de la bague en élastomère 17'. Chaque flasque de serrage 19 ou 20 possède une partie principale relativement épaisse, et un rebord périphérique circulaire respectivement 33 et 34 de plus faible épaisseur, et de dimension axiale très courte.

Les vis de réglage 23 possèdent une tête 24 logée dans l'épaisseur d'un flasque de serrage 20, et sont vissées dans des taraudages 31 directement ménagés dans l'épaisseur du flasque de serrage 19. Ces vis de réglage 23 s'étendent dans des encoches 35 ménagées à la périphérie de la bague en élastomère 17'.

Entre les deux flasques de serrage 19 et 20 est monté un élément tubulaire rigide 36 de faible épaisseur, entourant la bague en élastomère 17'.

Le réglage de la pression axiale exercée sur la bague en élastomère 17' au moyen des vis 23 est assuré ici :
- soit par le choix de la longueur de l'élément tubulaire 36, celui-ci venant directement en contact avec les rebords respectifs 33 et 34 des deux flasques de serrage 19 et 20 ;
- soit par l'épaisseur de cales annulaires (non représentées mais analogues aux cales 32) insérées entre cet élément tubulaire 36 et les rebords respectifs 33 et 34 des deux flasques de serrage 19 et 20.

Cette dernière forme de réalisation présente les avantages suivants :

Pour un encombrement extérieur donné du dispositif d'accouplement 1, le volume de matière élastique (bague en élastomère 17') est augmenté, ce qui diminue la rigidité de l'ensemble et améliore les propriétés d'amortissement.

L'épaisseur des parties principales des deux flasques de serrage 19 et 20 permet de loger facilement les têtes 24 des vis de réglage 23, et de visser ces dernières dans des taraudages 31 de longueur suffisante ménagés directement dans l'un de ces flasques.

La forme de réalisation des figures 13 et 14 reste compatible avec les caractéristiques décrites en référence aux figures précédentes ; par exemple, l'adjonction de joints d'étanchéité souples (tels que ceux repérés 21 et 22) ne pose aucune difficulté.

De par leur conception originale, les dispositifs d'accouplement 1 précédemment décrits peuvent fonctionner de trois façons différentes :
- Dans le cas de pignons 5 et 10 à dentures 7 et 12 profondes, coopérant avec un tronçon de courroie crantée 15 ou une bague en élastomère 17' relativement rigide, le serrage par les vis de réglage 23 restant limité pour permettre juste un rattrapage de jeu tout en laissant un certain degré de liberté dans les dentures, on obtient l'équivalent d'un accouplement à denture classique.
- Un dispositif d'accouplement de constitution identique au précédent, mais utilisé avec un serrage plus important par les vis de réglage 23, peut alors fonctionner en accouplement de précision, acceptant toutefois de faibles désalignements (accouplement semi-rigide de précision).
- Un dispositif d'accouplement selon l'invention avec une bague en élastomère 17'' souple, et des dentures 7 et 12 à profil arrondi ou ondulé, permet des désalignements importants dans tous les sens, tout en conservant un jeu nul au niveau des dentures, et constitue ainsi un accouplement véritablement élastique.

Comme le montre ce qui précède, les applications du dispositif d'accouplement 1 objet de l'invention sont multiples, et pratiquement universelles.

Dans tous les cas, le dispositif d'accouplement élastique 1 reste démontable, par dévissage complet des vis de réglage 23 et retrait du tronçon de courroie crantée 15 et/ou de la bague en élastomère fendue 17 ou 17' ou 17'', sans qu'il soit nécessaire de déplacer les arbres 2 et 3 reliés par ce dispositif d'accouplement. Avantageusement, les vis de réglage 23 sont des vis auto-freinées, évitant un desserrage intempestif dans le temps.

L'invention ne se limite pas aux seules formes d'exécution de ce dispositif d'accouplement élastique pour arbres tournants qui ont été décrites ci-dessus, à titre d'exemples. C'est ainsi, notamment, que l'on ne s'éloignerait pas du cadre de l'invention :
- en modifiant le profil des dents, dans les dentures respectives 7 et 12 des deux pignons 5 et 10,
- en supprimant éventuellement ces dentures, les pignons 5 et 10 étant remplacés par des manchons rigides et la liaison entre la bague en élastomère et ces manchons étant réalisée par simple adhérence grâce à la compression radiale de cette bague, l'ensemble pouvant ainsi constituer un accouplement de sécurité ;
- en modifiant le nombre des vis de réglage 23 et leurs intervalles angulaires,
- en remplaçant ces vis de réglage 23 par tous moyens de réglage à vis, ou équivalents, par exemple des vis de réglage assurant un serrage radial et non axial, de telles vis étant munies de patins et étant vissées dans les flasques de serrage 19 et 20 avec une disposition convergente vers le centre de la bague en élastomère ou similaire, ou encore tous moyens de pinçage permettant de presser la bague en élastomère, soit axialement, soit radialement,
- en utilisant tout mode de solidarisation, tel que sertissage ou soudage, ou autre liaison, entre les écrous 26 et l'un des flasques de serrage 19 ou 20, la solution avantageuse indiquée pour la forme de réalisation des figures 9 et 10 étant en particulier applicable aussi aux précédentes formes de réalisation ;
- en faisant varier la nature des matériaux constitutifs du tronçon de courroie crantée 15 et/ou de la bague en élastomère ou similaire 17 ou 17' ou 17'', ainsi que les épaisseurs relatives de ces parties, ladite bague étant par exemple réalisable aussi en caoutchouc.

## Revendications

1. Dispositif d'accouplement élastique pour arbres tournants, comportant un organe annulaire en élastomère ou matériau analogue (17,17',17'') dont la région intérieure est en prise, par engrènement et/ou adhérence, avec un premier pignon ou manchon rigide (5) solidaire de l'extrémité d'un premier arbre (2), et est aussi en prise par engrènement et/ou adhérence avec un second pignon ou manchon rigide (10) solidaire d'un second arbre (3), sensiblement coaxial au premier, l'organe annulaire en élastomère ou matériau analogue relativement incompressible (17,17',17'') étant lui-même entouré d'au moins un élément annulaire rigide (19,20,36) qui le maintient en place, caractérisé en ce qu'il comporte des moyens de réglage (19,20,23 à 36) de la compression axiale et radiale de son organe annulaire en élastomère ou matériau analogue relativement incompressible (17,17',17''), ces moyens permettant d'ajuster la rigidité ou l'élasticité du dispositif d'accouplement (1).

2. Dispositif d'accouplement élastique pour arbres tournants selon la revendication 1, caractérisé en ce que les moyens de réglage de la compression (19,20,23 à 36) agissent sur un organe annulaire en élastomère ou matériau analogue relativement incompressible (17',17'') qui se trouve directement en prise, par engrènement de dentures (7,12) et/ou par adhérence, avec deux pignons ou manchons rigides (5,10) respectivement solidaires des extrémités des deux arbres (2,3) à accoupler.

3. Dispositif d'accouplement élastique pour arbres tournants selon la revendication 1, caractérisé en ce que les moyens de réglage de la compression (19,20,23 à 36) agissent sur un organe annulaire en élastomère ou matériau analogue relativement incompressible (17) monté et serré autour d'un tronçon de courroie crantée (15), lui-même en prise avec les dentures (7,12) de deux pignons (5,10) respectivement solidaires des extrémités des deux arbres (2,3) à accoupler.

4. Dispositif d'accouplement élastique pour arbres tournants selon l'une quelconque des revendications 1 à 3, caractérisé en ce que les moyens de réglage de la compression axiale et radiale de l'organe annulaire en élastomère ou matériau analogue (17,17',17'') comprennent deux flasques de serrage rigides (19,20), le premier flasque (19) recouvrant une partie de la périphérie de cet organe et l'une de ses faces frontales annulaires, et le second flasque (20) recouvrant une autre partie de la périphérie dudit organe et sa face frontale annulaire opposée à la précédente, tandis que des moyens de liaison à vis (23 à 31), manoeuvrables depuis l'extérieur, relient les deux flasques de serrage (19,20) en permettant une modification de leur espacement axial (B).

5. Dispositif d'accouplement élastique pour arbres tournants selon la revendication 4, caractérisé en ce que les moyens de liaison à vis, montés entre les deux flasques de serrage (19,20), comprennent une pluralité de vis de réglage (23), sensiblement parallèles à l'axe général (4) du dispositif d'accouplement (1) et réparties à intervalles angulaires réguliers à la périphérie de ce dispositif, les têtes (24) des vis de réglage (23) prenant appui sur l'un des deux flasques de serrage (19,20), tandis que les filetages de ces vis de réglage (23) sont vissés dans des écrous ou taraudages (26,31) correspondants liés à l'autre flasque de serrage.

6. Dispositif d'accouplement élastique pour arbres tournants selon la revendication 5, caractérisé en ce que les tiges des différentes vis de réglage (23) traversent des passages (25) ou des encoches (35) ménagés dans l'organe annulaire en élastomère ou matériau analogue (17,17',17'').

7. Dispositif d'accouplement élastique pour arbres tournants selon la revendication 5, caractérisé en ce que l'organe annulaire en élastomère ou matériau analogue est réalisé en plusieurs tronçons (17a,17b,17c,17d) séparés les uns des autres en direction circonférentielle par des espaces libres (28) que traversent les vis de réglage (23).

8. Dispositif d'accouplement élastique pour arbres tournants selon la revendication 7, caractérisé en ce que les différents tronçons (17a,17b,17c,17d) de l'organe annulaire en élastomère ou matériau analogue sont collés sur l'un des deux flasques de serrage (19,20).

9. Dispositif d'accouplement élastique pour arbres tournants selon l'une quelconque des revendications 5 à 8, caractérisé en ce que les écrous (26), associés aux différentes vis de réglage (23), sont liés de façon oscillante (en 30) à l'un des deux flasques de serrage (19,20).

10. Dispositif d'accouplement élastique pour arbres tournants selon la revendication 5, caractérisé en ce que les vis de réglage (23) sont disposées à l'extérieur de la bague en élastomère ou matériau analogue (17''), et sont de préférence noyées dans les parties périphériques des deux flasques de serrage (19,20), chaque vis de serrage (23) étant directement vissée dans un taraudage (31) de l'un des flasques (19,20).

11. Dispositif d'accouplement élastique pour arbres tournants selon l'une quelconque des revendications 5 à 10, caractérisé en ce que des cales annulaires (32) sont interposées entre les deux flasques de serrage (19,20), dont les bords respectifs situés en regard l'un de l'autre sont relativement rapprochés, l'épaisseur totale des cales (32) déterminant le degré de serrage de la bague en élastomère ou matériau analogue (17'') lorsque les vis de serrage (23) sont serrées à fond.

12. Dispositif d'accouplement élastique pour arbres tournants selon l'une quelconque des revendications 5 à 10, caractérisé en ce que les parties périphériques (33,34) des deux flasques de serrage (19,20) possèdent une faible longueur axiale, et en ce qu'un élément tubulaire rigide (36) de relativement faible épaisseur est monté entre les deux flasques de serrage (19,20), autour de l'organe annulaire en élastomère ou matériau analogue (17').

13. Dispositif d'accouplement élastique pour arbres tournants selon la revendication 12, caractérisé en ce que chaque flasque de serrage (19,20) possède une partie principale relativement épaisse, logeant les têtes (24) des vis de réglage (23) ou comportant des taraudages (31) pour ces vis de réglage (23), et un rebord périphérique (33,34) de relativement faible épaisseur.

14. Dispositif d'accouplement élastique pour arbres tournants selon l'une quelconque des revendications 4 à 13, caractérisé en ce que les deux flasques de serrage (19,20) s'étendent, en direction de l'axe général (4) du dispositif d'accouplement (1), jusqu'à une faible distance du pignon ou manchon rigide (5,10) correspondant, solidaire de l'extrémité de l'un des deux arbres (2,3) à accoupler, et en ce qu'un joint annulaire d'étanchéité souple (21,22) est monté entre la région du bord circulaire intérieur de chaque flasque de serrage (19,20) et la face en regard appartenant au pignon ou manchon rigide (5,10) correspondant.
